# EUROPEAN PATENT SPECIFICATION

(11) **EP 4 079 642 B1**
(45) Date of publication and mention of the grant of the patent: **31.07.2024**
(21) Application number: 22167301.5
(22) Date of filing: 08.04.2022
(51) Int. Cl.: B64F 1/02, B64C 39/02

(54) **ROTATABLE MASTS TO RECOVER AIRCRAFT WITH KITES**
DREHBARE MASTEN ZUM BERGEN VON FLUGZEUGEN MIT DRACHEN
MÂTS ROTATIFS POUR RÉCUPÉRER DES AVIONS AVEC DES CERFS-VOLANTS

(30) Priority: 20.04.2021 US 202163177242 P
(43) Date of publication of application: 26.10.2022
(73) Proprietor: INSITU, INC. a subsidiary of The Boeing Company, Bingen, WA 98605 (US)
(72) Inventor: COMSTOCK, Kelly A, Bingen, 98605 (US); DECKER, Jeffrey P, Bingen, 98605 (US); SHAW, Daniel L, Bingen, 98605 (US)
(74) Representative: Boult Wade Tennant LLP

(56) References cited:
- EP-A1- 3 564 124
- EP-A1- 3 680 181
- EP-A1- 3 835 202
- WO-A2-2015/160394
- US-A- 4 311 290
- US-B2- 8 276 844

## Description

### FIELD OF THE DISCLOSURE

This disclosure relates generally to aircraft and, more particularly, to rotatable masts to recover aircraft with kites.

### BACKGROUND

In recent years, unmanned aerial vehicles (UAVs) or drones have been used to fly significant distances to transport payloads (e.g., packages, supplies, equipment, etc.) or gather information. Some UAVs land on runways while others are captured in flight by UAV recovery systems. Capturing UAVs without the use of a runway enables greater flexibility in recovery locations. In particular, a UAV can be recovered in an unprepared area or on relatively smaller ships or other vessels or vehicles.

EP 3835202, in accordance with its abstract, states methods and apparatus to recover unmanned aerial vehicles (UAVs) with kites are disclosed. A disclosed example apparatus to recover a UAV during flight includes a tether line, a tensioner operatively coupled to the tether line, and a kite operatively coupled to the tether line to support the tether line for recovery of the UAV. This European patent application falls within the terms of Art. 54(3), such that the document is not relevant to the question of inventive step.

EP 3564124, in accordance with its abstract, states an unmanned aerial vehicle (UAV) system is disclosed. The system comprising a UAV, a lifting device, a parachute carried by the lifting device and a capture line attached to the parachute and configured to engage with a corresponding engagement element carried by the UAV.

US 4311290, in accordance with its abstract, states that apparatus and method for recovering and arresting an aircraft or other vehicle is provided. A boom is swivelly connected to a support structure via braking mechanism. The boom is pivotally connected to the brake mechanism such that it can also pivot in a second, different plane intersecting the plane of rotation of the brake mechanism. A shear pin prevents pivoting of the boom in the second plane until the boom has experienced a predetermined load in that plane. The distal end of the boom distant from the brake mechanism is provided with structure for engaging the aircraft. When the aircraft is flown at and captured by the boom, the weight and motion of the aircraft breaks the shear pin, causing the boom to move in the second plane until engaged by a stop. This rapid change in position of the engaging end of the boom in the second plane prevents the aircraft from pendulating about the boom. Forward motion of the aircraft also causes movement within the brake mechanism in the first plane which absorbs the kinetic energy of the aircraft as the boom swivels against the brake mechanism, so that the aircraft is slowed and arrested.

US 8276844, in accordance with its abstract, states a system for landing UAV's is provided. The system comprises a slingshot structure that includes arm based structure and an axis means installed along the arm of the structure and wherein it enables the arm to move around it in addition, the system comprises base means connecting the axis means to a platform at which the system is installable. The system also include a controlled pulling and braking means that connects between the arm of the structure and the platform upon which the system is installable and a stretchable elastic means installed in a stretched manner at a gap formed between two arms and set to connect with a landing UAV. At the landing phase, the controlled pulling and braking means of the system, essentially breaks the motion of the arm based structure that is propelled to revolve around the system's axis means, from a time that the UAV forms contact with the elastic means and with it propels the structure to move around the axis means.

EP 3680181, in accordance with its abstract, states that there is provided systems and methods for point take-off and landing (PTOL) of unmanned flying objects onto a confined landing surface associated with a landing body.

### SUMMARY

There is described herein, a mast for recovery of an aircraft, the mast comprising: a base; a pivot fixed to the base; a first spine rotatable about the pivot; a kite; a tether line; first and second opposing arms extending from the first spine, the first and second opposing arms supporting at least a portion of the kite, the kite carrying the tether line for recovery of the aircraft; and a second spine extending from the first spine, the second spine including third and fourth opposing arms extending therefrom.

There is also described herein, a ship comprising a mast for recovery of an aircraft, the mast comprising: a base; a pivot fixed to the base; a first spine rotatable about the pivot; a kite; a tether line; first and second opposing arms extending from the first spine, the first and second opposing arms supporting at least a portion of the kite, the kite carrying the tether line for recovery of the aircraft; and a second spine extending from the first spine, the second spine including third and fourth opposing arms extending therefrom.

There is also described herein, a method comprising: placing a kite onto a mast, the mast having a first spine with first and second opposing arms extending therefrom to hold the kite, the mast further comprising a second spine extending from the first spine, the second spine including third and fourth opposing arms extending therefrom, wherein the kite is operatively coupled to a tether line; rotating the mast about a pivot to launch the kite from a base; and recovering an aircraft via the tether line supported by the kite.

### BRIEF DESCRIPTION OF THE DRAWINGS

FIG. 1A depicts an unmanned aerial vehicle (UAV) recovery system in accordance with teachings of this disclosure.
FIG. 1B depicts operation of the example UAV recovery system of FIG. 1A.
FIG. 2 is a detailed view an example mast of the example UAV recovery system of FIGS.
1A and 1B.
FIGS. 3A-3E depict an example kite launch sequence that can be implemented with examples disclosed herein.
FIGS. 4A- 4D depict an example UAV capture sequence that can be implemented with examples disclosed herein.
FIGS. 5A-5D depict an example kite recovery sequence that can be implemented with examples disclosed herein.
FIGS. 6A-6G depict an alternative example recovery sequence of a UAV and the kite.
FIG. 7 is a schematic overview of an example recovery analysis system that can be implemented in examples disclosed herein.
FIG. 8 is a flowchart representative of an example method to implement the UAV recovery system of FIG. 1 and/or the example recovery analysis system of FIG. 7.
FIG. 9 is a block diagram of an example processing platform structured to execute the instructions of FIG. 8 to implement the UAV recovery system of FIG. 1 and/or the example recovery analysis system of FIG. 7.

The figures are not to scale. Instead, the thickness of the layers or regions may be enlarged in the drawings. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. As used in this patent, stating that any part is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections.

### DETAILED DESCRIPTION

Rotatable masts to recover aircraft with kites are disclosed. Some aircraft, such as unmanned aerial vehicles (UAVs), are recovered by recovery systems, which employ a recovery tether line that is suspended vertically. In particular, a UAV contacts and/or impacts the tether line and, as a result, the UAV is decelerated and/or stopped from flight, thereby enabling recovery of the UAV without need for a runway. In some known examples, a parachute or support beam or movable boom is used to suspend the tether line for recovery of the UAV.

Examples disclosed herein enable an effective, compact and relatively low cost recovery of an aircraft (e.g., a UAV) via a stationary platform or a moving vehicle (e.g., a ship or vessel, a ground-based vehicle, a submersible, etc.). Examples disclosed herein enable a relatively small crew to quickly deploy a kite (e.g., a parafoil kite) for recovery of the aircraft. According to examples disclosed herein, the kite extends from a ship or a stationary land-based structure and generates lift to support and/or suspend a tether line to enable controlled recovery of the aircraft by decelerating the aircraft when the aircraft contacts and/or impacts the tether line. The aforementioned tether line can operatively coupled to a tension device (e.g., a tensioner, a winch, a motorized winch, etc.). The tension device is implemented to retrieve the tether line along with the kite and the aircraft.

Examples disclosed herein utilize a rotatable mast to deploy a kite that supports, carries and/or suspends a tether line. For example, by implementing the mast, the kite can be deployed by raising the kite above obstacles (e.g., obstacles on a ship deck). According to examples disclosed herein, the tether line extends from a base (e.g., a surface or floor of a vehicle and/or watercraft, etc.) and the aforementioned mast is rotatable about a pivot of the base (e.g., a pivot fixed to the base). The mast includes a spine with first and second arms (e.g., first and second opposing arms) extending therefrom to support, position, hold and/or carry the kite when the mast is rotated about the pivot and away from the base. In some examples, the first and second arms form and/or define a V-shaped or approximately V-shaped arrangement relative to one another (e.g., resembling an antenna or antlers in appearance).

In some examples, each of the first and second arms includes contours (e.g., U-shaped or V-shaped indentations or bends, etc.) to receive at least a portion of the kite (e.g., the entire kite), which can be complementarily shaped to the contours. An additional spine extends from the spine with third and fourth arms (e.g., third and fourth opposing arms) to guide the tether line and/or a support line associated with the kite. In some examples, a controller is implemented to direct an actuator to cause rotation of the mast. In some such examples, sensor data is utilized to calculate a degree to which the mast is to be rotated. The sensor data utilized by the controller may correspond to a degree to which the kite is centered relative to the mast. In some examples, the tether line includes a capture rope and a kite tether. In some examples, the mast includes a guide to align, support and/or hold the aircraft as the aircraft is drawn in toward the mast via the tether line.

As used herein, the term "opposing" refers to components and/or objects that face one another to at least some degree. Accordingly, as used herein, the term "opposing" does not necessarily refer to components and/or objects that are diametrically opposed.

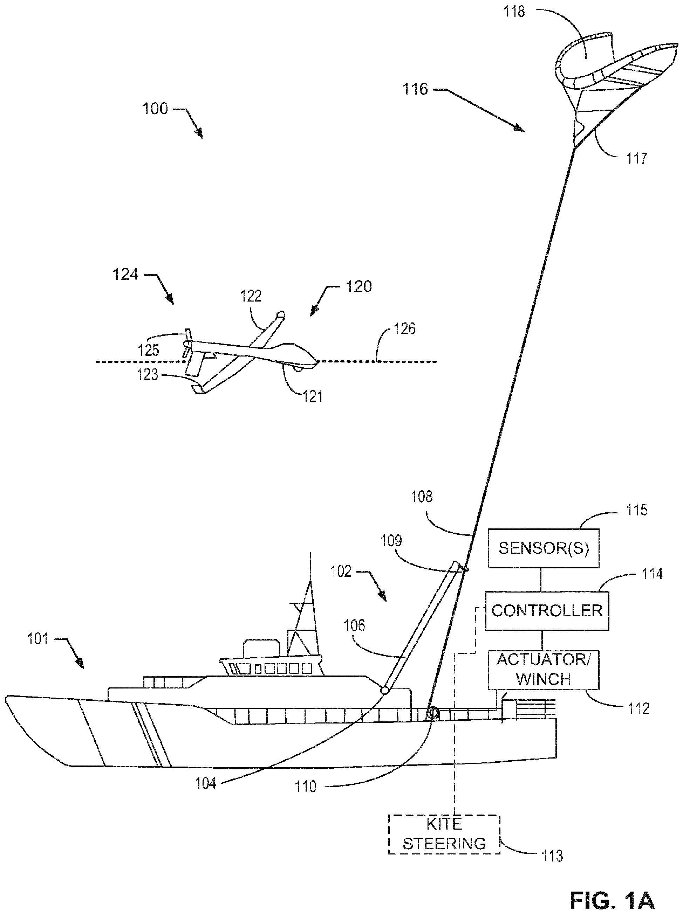

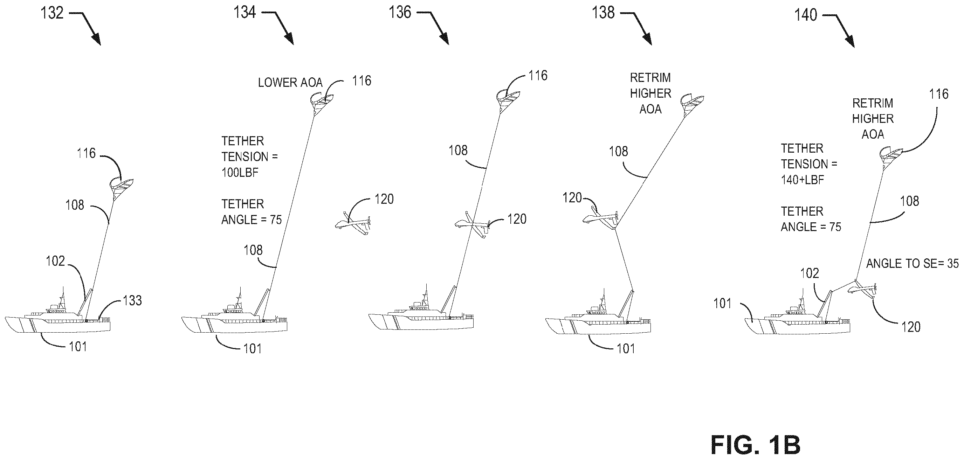

FIG. 1 depicts a UAV recovery system 100 in accordance with teachings of this disclosure. The UAV recovery system 100 of the illustrated example is implemented on a vessel or ship 101 and includes a mast (e.g., a rotatable mast, a swivel mast, a pivoting mast, a boom, etc.) 102, which rotates about a pivot 104. The example mast 102 includes a spine 106 and a guiding portion 109 to guide, align and/or restrain a tether line 108. In the illustrated example, the UAV recovery system 100 includes a tensioner or tension device 110, which is implemented as a winch in this example, to support the tether line 108. In some examples, the tension device 110 is operatively coupled to an actuator 112. In some such examples, the tension device 110 is communicatively coupled to an example controller 114 which, in turn, is communicatively coupled to sensor(s) 115. In some examples, kite steering (e.g., kite steering systems, kite steering component(s), etc.) 113 is implemented to direct kite movement.

In the illustrated example, the tether line 108 is operatively coupled to a kite (e.g., a parafoil kite) 116 having support lines (e.g., kite lines, foil lines, etc.) 117 and a foil (e.g., a lift foil, a lift generation foil, a kite body) 118. The UAV recovery system 100 of the illustrated example is implemented to capture an aircraft 120, which is implemented as a UAV in this and other examples. In still other examples, the aircraft 120 may be implemented as another type of aircraft (e.g., a manned aircraft), spacecraft, etc.

The example UAV 120 includes a fuselage 121, wings 122 each of which includes a distal capture portion 123, and a propulsion system 124 with propellers 125. In this and other examples, the distal capture portion 123 extends from at least one of the corresponding wings 122 along a direction of movement of the UAV 120 or approximately along a direction of movement of the UAV 120. However, any appropriate type of capture or recovery mechanism can be, instead, implemented on any other portion and/or component (e.g., the fuselage 121) of the UAV 120. Further, any other appropriate type of propulsion of the UAV 120 can be implemented instead.

To recover and/or capture the UAV 120 as the UAV 120 moves along a flight path 126, one of the distal capture portions 123 is brought into contact with the tether line 108 extending between the kite 116 and the vessel 101. As a result, the UAV 120 is brought to a rest and remains attached to the tether line 108. In this and other examples, the tether line 108 is suspended by the kite 116 as the kite 116 generates lift to support the tether line 108 in the air (e.g., substantially vertically in the air, within 5-15 degrees from vertical, or vertically in the air). Further, subsequent to decelerating the UAV 120, the kite 116 and the tether line 108 are drawn back to the vessel 101.

In some examples, the tensioner 110, which may be moved by the actuator 112, maintains a tension of the tether line 108 extending between the vessel 101 and the kite 116 within a threshold range and/or at a nominal tension value. In some examples, the kite 116 is steered by the kite steering 113 to direct the tether line 108 within a requisite range of the aforementioned flight path 126 such that the UAV 120 contacts the tether line 108 at a desired angle of attack or position. Additionally or alternatively, the kite 116 is directed to the flight path 126 based on a desired impact force level (e.g., an impact force below a threshold impact force value) of the tether line 108 with the distal capture portion 123.

FIG. 1B depicts an example recovery time sequence. Time step 132 depicts deployment of the tether 108 via the mast 102. In particular, the mast 102 has been rotated from a base (e.g., a ship deck) 133 of the vessel 101. Subsequent to or during the mast 102 being rotated, the kite 116 is released from the mast 102. In particular, the kite 116 is stored and/or supported by the mast 102 prior to being deployed when the mast 102 is rotated upward.

Time step 134 depicts the UAV 120 approaching the tether line 108, which extends between the vessel 101 and the kite 116. In this and other examples, the kite 116 is supporting the tether line 108 as the UAV 120 is being navigated to cause the distal capture portion 123 (shown in FIG. 1) of the UAV 120 to contact the tether line 108 and, thus, decelerate the UAV 120.

At time step 136, the UAV 120 is shown in contact with the tether line 108. In this and other examples, the distal portion 123 of FIG. 1 is caught on the tether line 108, thereby causing the tether line 108 along with the kite 116 to be displaced and/or moved as the UAV 120 is decelerated.

Time step 138 depicts the UAV 120 captured on the tether line 108 and being winched toward the vessel 101. In this and other examples, the tension device 110 of FIG. 1 causes a motion (e.g., a reeling motion) of the tether line 108 and the UAV 120 toward the vessel 101 while the mast 102 supports the tether line 108 and the kite 116 maintains a lift force (e.g., an upward lift force in the view of FIG. 1B) to support the tether line 108. As a result, the UAV 120 is brought onto the vessel 101.

At time step 140, the kite 116 is being recovered as the UAV 120 is held on the tether line 108. In particular, as the UAV 120 is pulled toward the vessel 101, the kite 116 is pulled toward the mast 102. In other words, the kite 116 is being recovered after the UAV 120 is brought toward the vessel 101 and/or the mast 102.

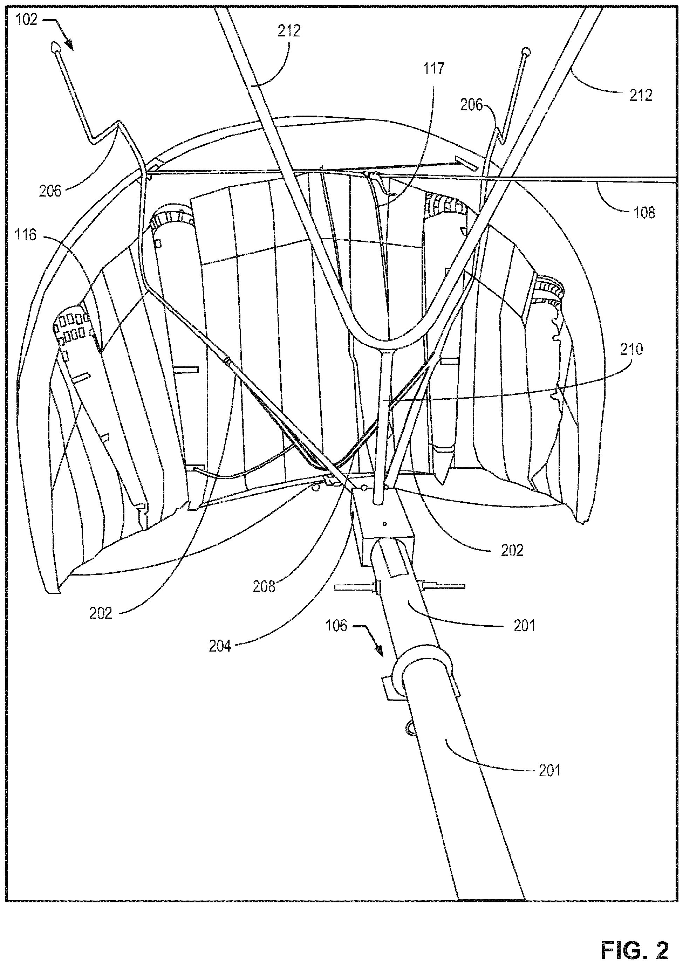

FIG. 2 is detailed view of the example mast 102 of the example UAV recovery system 100 of FIGS. 1A and 1B. In the illustrated example of FIG. 2, the mast 102 includes the spine 106 with longitudinal sections (e.g., telescoping longitudinal sections, etc.) 201 and arms (e.g., opposing arms) 202 extending from a junction 204 of the spine 106. In this and other examples, the junction 204 is positioned at a distal end of the longitudinal sections 201. Further, the example arms 202 include contours (e.g., curves, curved recesses) 206 and extend from the spine 106 and/or the junction 204 in an arrangement resembling the letter "v". In other words, the arms 202 extend to define a V-shaped arrangement. In this and other examples, the arms 202 include a cross-brace 208 extending therebetween. In particular, the example cross-brace 208 is V-shaped or approximately V-shaped. According to the illustrated example, a spine 210 extends from the junction 204 and/or the spine 106. In turn, the example spine 210 includes arms (e.g., opposing arms) 212 extending therefrom in a V-shaped arrangement.

To support and/or hold the kite 116, the contours 206 are shaped (e.g., complementarily shaped) to receive corresponding portions of the kite 116. For example, the portions of the kite 116 can be complementarily shaped and/or have complementary curvature to the contours 206 to facilitate holding the kite 116 by the arms 202 when the kite 116 is moved by the mast 102. In this and other examples, the contours 206 include a U-shaped or V-shaped portion (or an approximately U-shaped or approximately V-shaped portion) to receive at least a portion of the kite 116. Further, the example tether line 108 is held in tension to secure the kite 116 to the arms 202. According to examples disclosed herein, the kite 116 is positioned and retained by the contours 206 of the arms 202 when the mast 102 is being rotated for either deployment of the kite 116 or for retrieval of the kite 116.

To align and/or restrain the tether line 108 relative to the kite 116, the tether line 108 is placed between the arms 212 while being coupled to the kite 116 and/or the support lines 117. The arms 212 guide movement and positioning of the tether line 108. Further, the contours 206 are open toward a direction facing away from the arms 212, thereby enabling the tether line 108 to hold the kite 116 to the corresponding contours 206 when the tether line 108 is pulled to bring the kite 116 into the contours 206. In other words, a tension of the tether line 108 can facilitate retention of the kite 116 in the contours 206 of the arms 202 and, as a result, the kite 116 is secured to the mast 102 when the mast 102 is rotated upward and downward relative to the vessel 101 and/or the base 133.

In some examples, the longitudinal sections 201 can move along a longitudinal direction of the spine 106 such that the spine 106 and/or the longitudinal sections 201 are telescoping. In some examples, the arms 202 and/or the arms 212 can be foldable and/or move apart and closer to one another (e.g., in a pincer-type movement). Additionally or alternatively, the spine 210, the arms 202 and/or the arms 212 can be foldable relative to the spine 106. In some such examples, the spine 210, the arms 202 and/or the arms 212 may be folded by the actuator 112 (e.g., under direction of the controller 114).

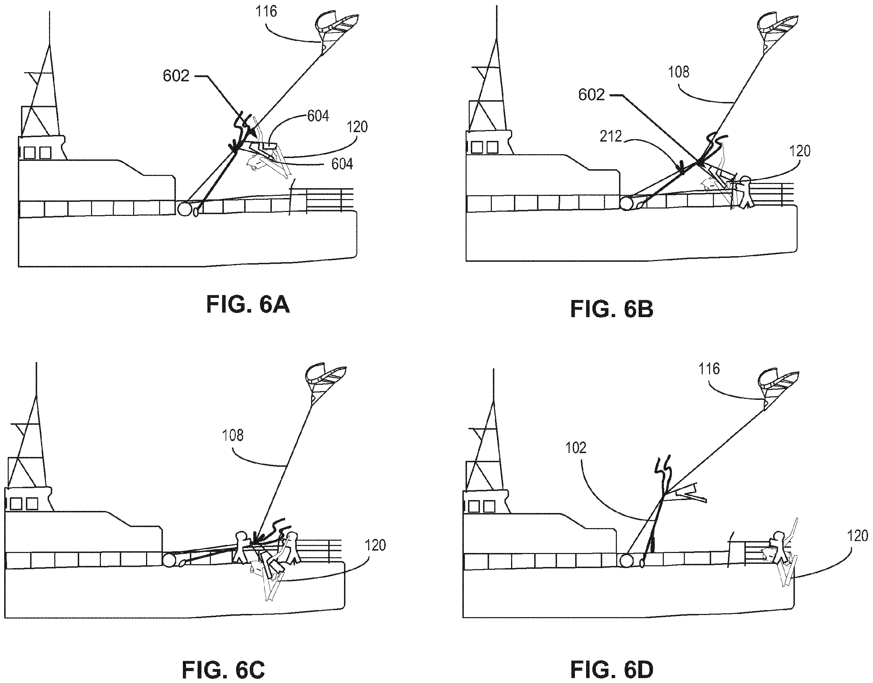

While two of each of the arms 202 and the arms 212 is shown in the example of FIG. 2, any appropriate number of the arms 202 and the arms 212 can be implemented instead, while falling under the scope of the appended claims. For example, as shown below in connection with FIGS. 6A-6G, additional arms or features can be implemented on the mast 102 to guide and/or hold the UAV 120 during recovery thereof. Further any other appropriate shape and/or relative orientation of the contours 206, the arms 202 and/or the arms 212 can be implemented instead. In other words, the V-shaped arrangements shown can, alternatively, be other shapes (e.g., zig-zag shapes, ovular, etc.)

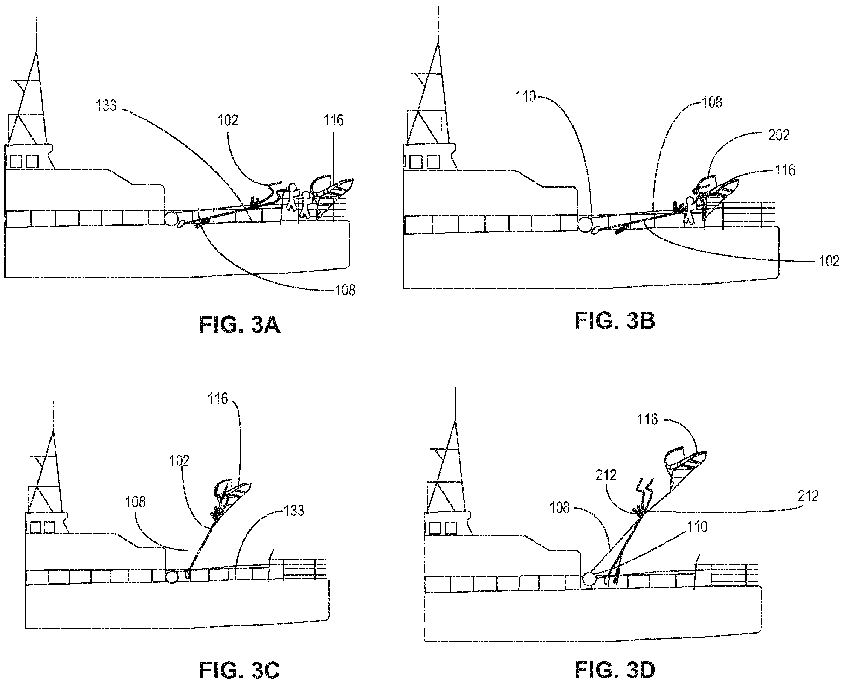

FIGS. 3A-3E depict an example kite launch sequence that can be implemented with examples disclosed herein. Turning to FIG. 3A, the mast 102 is shown rotated proximate or on the base 133 while the kite 116 is inflated and coupled to the tether line 108. In the illustrated view of FIG. 3A, the kite 116 is not yet held and/or retained by the mast 102.

FIG. 3B depicts the tension device 110 drawing in the tether line 108, thereby causing the kite 116 to be held in place by the arms 202 of the mast 102. In some examples, the arms 202 act as guides (e.g., converging guides) to guide the kite 116 into the contours 206 shown in FIG. 2. Additionally or alternatively, operators guide the kite 116 into and/or toward the contours 206.

Turning to FIG. 3C, the mast 102 is rotated upward and away from the base 133 while the kite 116 is held by the mast 102. In this and other examples, a tension of the tether line 108 secures the kite 116 to the mast 102 as the mast 102 is raised.

FIG. 3D depicts the kite 116 being deployed, released and/or launched as the tension device 110 allows the tether line 108 to move outward therefrom. Accordingly, the tether line 108 is guided by and/or held in place by the arms 212 as the kite 116 is being released.

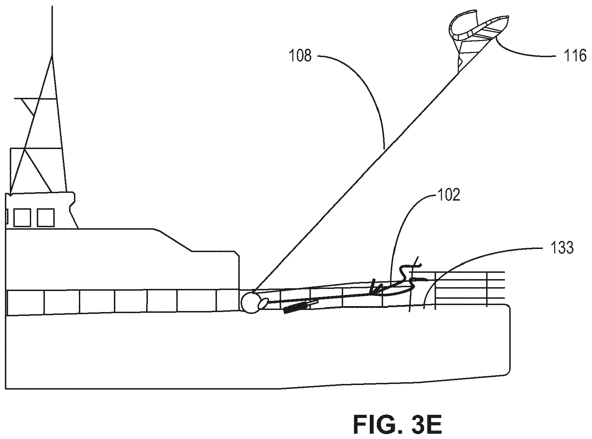

In FIG. 3E, the kite 116 is deployed and held by the tether line 108. In this and other examples, the mast 102 is lowered to the base 133 while the kite 116 is deployed for capture of the UAV 120 (not shown).

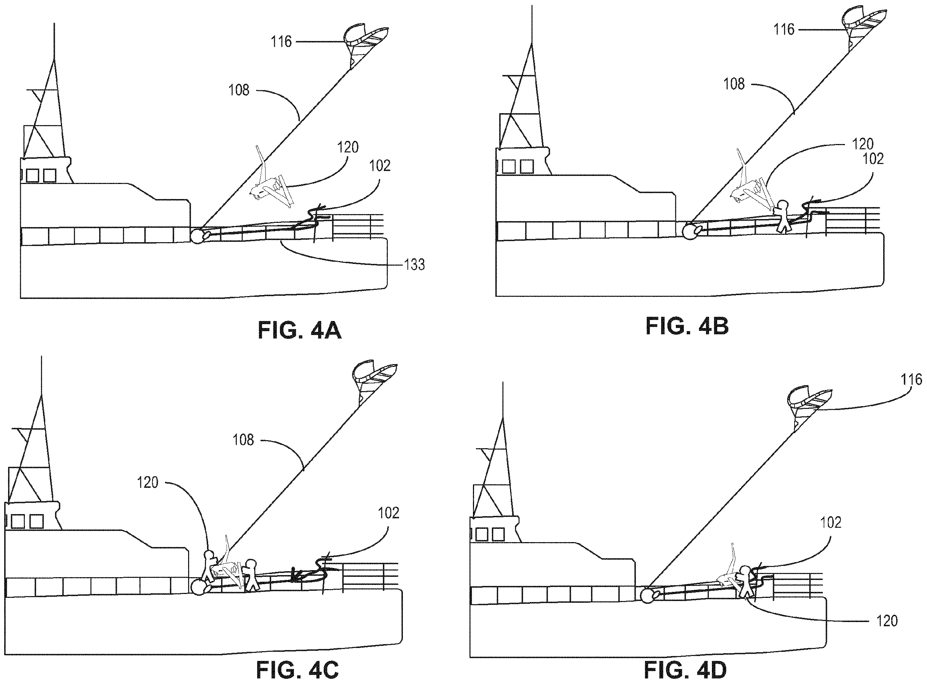

FIGS. 4A-4D depict an example capture sequence that can be implemented with examples disclosed herein. In the illustrated example, the mast 102 is lowered as the UAV 120 is captured. In FIG. 4A, the kite 116 is reeled in with the tether line 108 so that the UAV 120 is 6-8 feet (1.8-2.4 metres) above the base 133 (or approximately 6-8 feet (approximately 1.8-2.4 metres) above the base 133).

Turning to FIG. 4B, the UAV 120 is stabilized by an operator. For example, the kite 116 suspends the tether line 108 as the UAV 120 is grabbed and held by the operator.

FIG. 4C depicts the UAV 120 being reeled in. In the illustrated example, a hook disengagement tool is used to remove the tether line 108 from a hook of the UAV 120.

FIG. 4D depicts the UAV 120 being stowed as the kite 116 is being reeled in. In some examples, an operator removes the kite 116 once it is within reach.

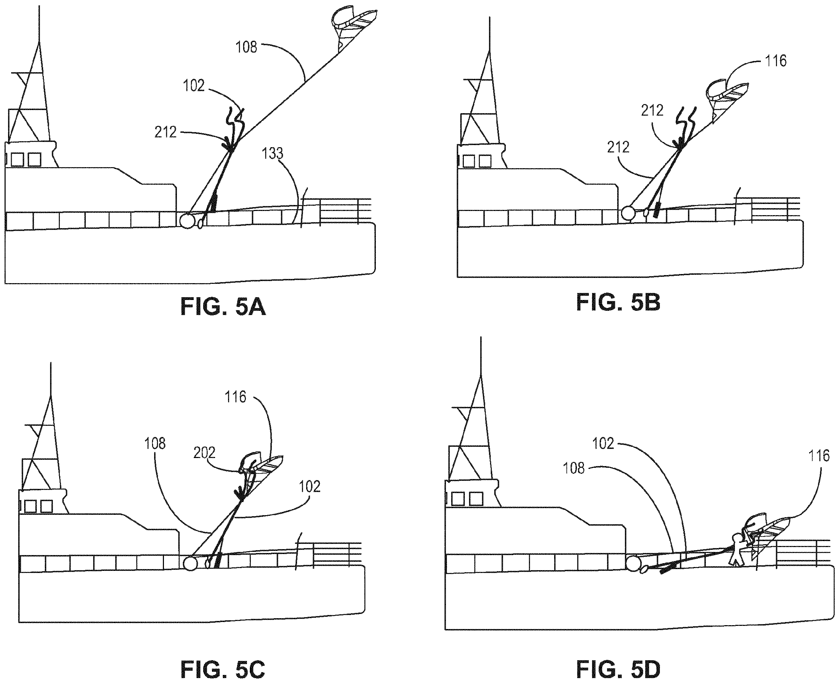

FIGS. 5A-5D depict an example kite recovery sequence that can be used with examples disclosed herein. FIG. 5A depicts the mast 102 being raised and/or rotated from the base 133. In this and other examples, the mast 102 is raised so that the arms 212 engage the tether line 108. In some examples, the mast 102 is moved and/or rotated before being raised so that the tether line 108 is positioned (e.g., centered) between the arms 212.

Turning to FIG. 5B, the kite 116 is reeled in via the tether line 108 as the arms 212 guide the tether line 108.

FIG. 5C depicts the kite 116 secured in the arms 202 of the mast 102. In the illustrated example, a tension of the tether line 108 secures the kite 116 to the arms 202. In other examples, a lock (e.g., a springloaded lock, an actuator-based lock, etc.) is implemented to hold the kite 116 to the arms 202 when the kite 116 is being recovered.

Turning to FIG. 5D, the mast 102 is lowered with the kite 116. In this and other examples, the kite 116 is deflated and removed from the tether line 108.

FIGS. 6A-6G depict an alternative example recovery sequence of the UAV 120 and the kite 116. In the illustrated example of FIGS. 6A-6G, the UAV 120 is to be supported and/or retained by the mast 102 during recovery thereof. FIG. 6A depicts the kite 116 being reeled in until the UAV 120 contacts a guide 602. In this and other examples, the guide 602 includes arms 604 extending in a V-shaped arrangement.

FIG. 6B depicts the UAV 120 being lowered along with the guide 602. In this and other examples, the arms 212 guide the tether line 108 as the kite 116 is lowered.

FIG. 6C depicts the UAV 120 being reeled in. In the illustrated example, a hook disengagement tool is used to remove the tether line 108 from a hook of the UAV 120.

Turning to FIG. 6D, the mast 102 is raised with the kite 116 deployed. Further, the UAV 120 is stowed.

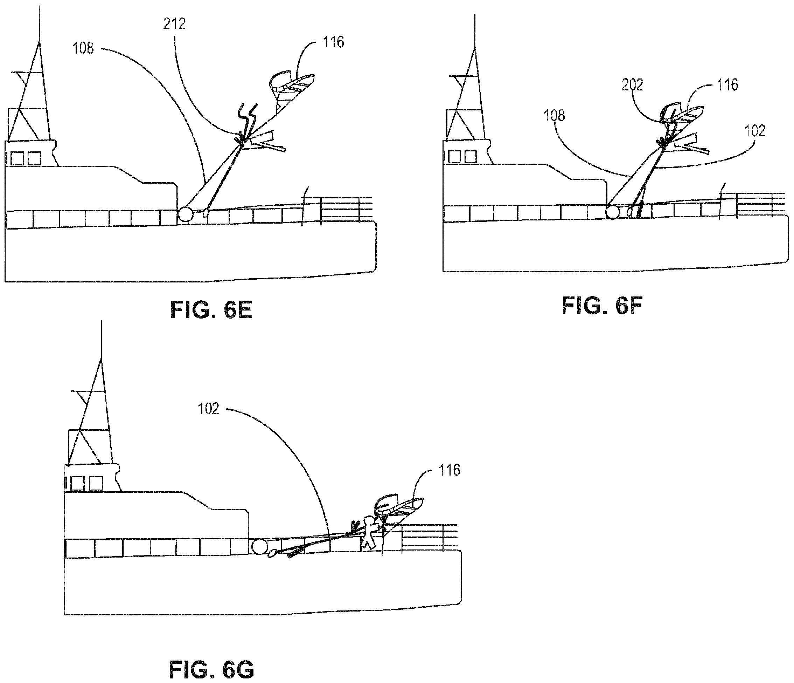

FIG. 6E depicts the kite 116 being lowered with (e.g., drawn by, reeled in by) the tether line 108 guided by the arms 212.

FIG. 6F depicts the kite 116 secured in the arms 202 of the mast 102. In this and other examples, a tension of the tether line 108 holds the kite 116 in the arms 202.

In the illustrated example of FIG. 6G, the mast 102 is lowered and the kite 116 is removed. Further, the kite 116 is deflated in this example.

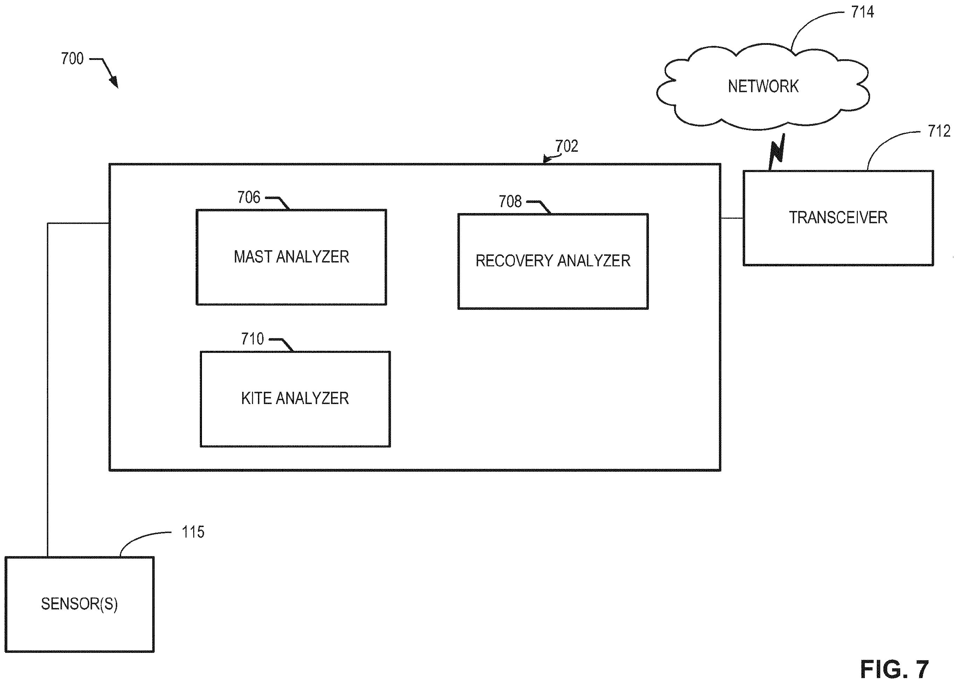

FIG. 7 is a schematic overview of an example recovery analysis system 700 that can be implemented in examples disclosed herein. The analysis system 700 can be implemented in the controller 114 shown in FIG. 1A, for example. The recovery analysis system 700 of the illustrated example includes an analyzer 702 which, in turn, includes a mast analyzer 706, a recovery analyzer 708 and a kite analyzer 710. In this and other examples, the recovery analyzer 702 is communicatively coupled to a transceiver 712 that is in communication with a network 714. Further, the example recovery analyzer 702 is communicatively coupled to the sensor(s) 115.

The mast analyzer 706 of the illustrated example determines an orientation to which the mast 102 should be rotated. For example, the mast analyzer 706 determines whether the kite 116 is being deployed or recovered. Additionally or alternatively, the mast analyzer determines a desired orientation of the mast 102 to facilitate an accurate and/or favorable placement of the tether line 108 to recover the UAV 120. In some examples, the desired orientation can correspond to an angle of the mast 102 that reduces forces (e.g., impact forces) of the UAV 120 with the tether line 108.

The example recovery analyzer 708 determines whether the mast 102 is to be deployed and/or rotated away from the base 133 based on whether an aircraft is to be recovered and/or whether the aircraft has been recovered. In some examples, the recovery analyzer 708 determines whether the kite 116 is to be deployed or recovered (e.g., in response to determining that the UAV 120 has been recovered, etc.).

The example kite analyzer 710 determines a position and/or state of the kite 116. In some examples, the kite analyzer 710 determines whether the kite 116 is centered relative to the mast 102 and/or the spine 106 (e.g., centered relative to a center line of the mast 102 and/or the spine 106). Additionally or alternatively, the kite analyzer 710 controls movement of the kite 116 (e.g., a trim of the kite 116) to facilitate recovery of the UAV 120. In some examples, the movement and/or a position of the kite 116 is adjusted by the kite steering 113 shown in FIG. 1 to facilitate recovery of the kite 116 by the mast 102 (e.g., the kite 116 is moved to be centered relative to the arms 212).

While an example manner of implementing the recovery analysis system 700 of FIG. 7 is illustrated in FIG. 7, one or more of the elements, processes and/or devices illustrated in FIG. 7 may be combined, divided, re-arranged, omitted, eliminated and/or implemented in any other way. Further, the example mast analyzer 706, the example recovery analyzer 708, the example kite analyzer 710 and/or, more generally, the example recovery analysis system 700 of FIG. 7 may be implemented by hardware, software, firmware and/or any combination of hardware, software and/or firmware. Thus, for example, any of the example mast analyzer 706, the example recovery analyzer 708, the example kite analyzer 710 and/or, more generally, the example recovery analysis system 700 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, mast analyzer 706, the example recovery analyzer 708, and/or the example kite analyzer 710 is/are hereby expressly defined to include a non-transitory computer readable storage device or storage disk such as a memory, a digital versatile disk (DVD), a compact disk (CD), a Blu-ray disk, etc. including the software and/or firmware. Further still, the example recovery analysis system 700 of FIG. 7 may include one or more elements, processes and/or devices in addition to, or instead of, those illustrated in FIG. 7, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

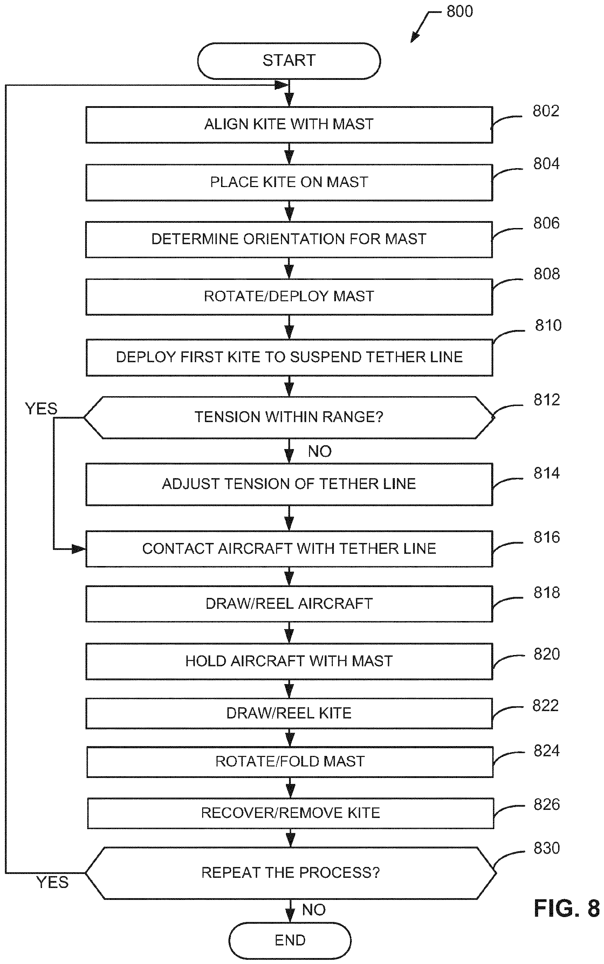

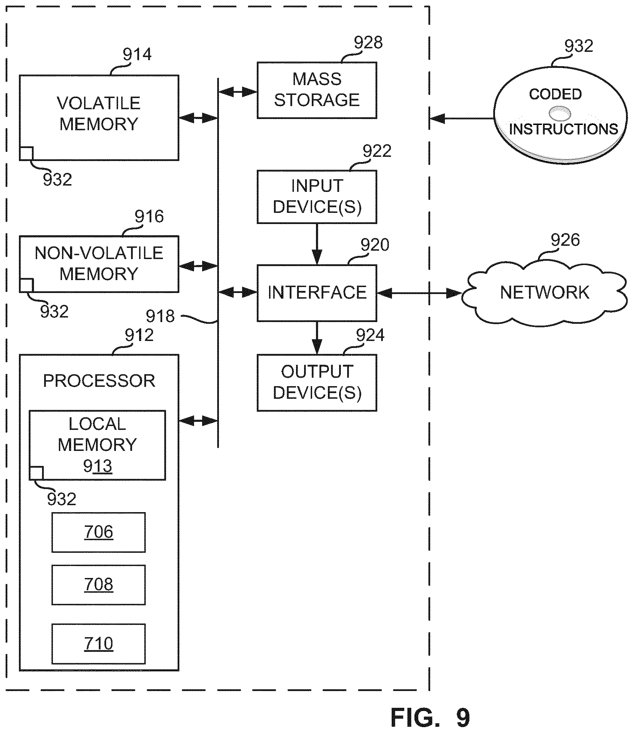

A flowchart representative of example hardware logic, machine readable instructions, hardware implemented state machines, and/or any combination thereof for implementing the recovery analysis system 700 of FIG. 7 is shown in FIG. 8. The machine readable instructions may be one or more executable programs or portion(s) of an executable program for execution by a computer processor and/or processor circuitry, such as the processor 912 shown in the example processor platform 900 discussed below in connection with FIG. 9. The program may be embodied in software stored on a non-transitory computer readable storage medium such as a CD-ROM, a floppy disk, a hard drive, a DVD, a Blu-ray disk, or a memory associated with the processor 912, but the entire program and/or parts thereof could alternatively be executed by a device other than the processor 912 and/or embodied in firmware or dedicated hardware. Further, although the example program is described with reference to the flowchart illustrated in FIG. 8, many other methods of implementing the example recovery analysis system 700 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In other examples, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In other examples, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIG. 9 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to examples including any of (1) at least one A, (2) at least one B, and (3) at least one A and at least one B. Similarly, as used herein in the context of describing structures, components, items, objects and/or things, the phrase "at least one of A or B" is intended to refer to examples including any of (1) at least one A, (2) at least one B, and (3) at least one A and at least one B. As used herein in the context of describing the performance or execution of processes, instructions, actions, activities and/or steps, the phrase "at least one of A and B" is intended to refer to examples including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to examples including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

The example method 800 of FIG. 8 begins as the UAV 120 is to be recovered via the tether line 108. In particular, the tether line 108 is to be suspended above the base 133 by the kite 116. Subsequently the UAV 120 is recovered when the UAV 120 contacts the tether line 108.

At block 802, the kite 116 is aligned with the mast 102. Additionally or alternatively, a rotation of the mast 102 is controlled to align the mast 102 with the kite 116. For example, the mast analyzer 706 and/or the kite analyzer 710 controls the actuator 112 to align the mast 102 with the kite 116. In some examples, the kite analyzer 710 determines whether the kite 116 is centered relative to the arms 202 to facilitate placement of the kite 116 for deployment.

At block 804, the kite 116 is placed/mounted to the mast 102. In this and other examples, the kite 116 is mounted to the contours 206 of the respective arms 202.

At block 806, in some examples, the mast analyzer 706 and/or the kite analyzer 710 determines an orientation to which the mast 102 is to be rotated. This determination can be based on sensor data from the sensor(s) 115. In some examples, the sensor data pertains to a desired angle of the tether line 108 that corresponds to recovering the UAV 120. Additionally or alternatively, the orientation can be based on wind conditions, a position of the kite 116, flight information of the UAV 120, flight sensor data of the UAV 120 and/or movement of the vessel 101.

At block 808, the mast 102 is rotated and preferably deployed. In particular, the mast 102 is rotated upward and away from the base 133. In some examples, the actuator 112 rotates the mast. In some examples, the mast 102 is deployed to set the tether line 108 at a near vertical angle (e.g., within 5 degrees from perpendicular to the Earth). In some examples, the tether line 108 is caused to be 70 to 80 or approximately 70 to 80 degrees (e.g., 75 degrees) from the Earth.

At block 810, the kite 116 is deployed to suspend the tether line 108. In this and other examples, moving the kite 116 above the base 133 allows the wind to cause the kite 116 to ascend. Accordingly an unreeled amount of the tether line 108 at least partially controls the height to which the kite 116 ascends.

At block 812, the example recovery analyzer 708 determines whether a tension of the tether line 108 is within a desired range. If the tension is within the range (block 812), the process proceeds to block 816. Otherwise, the process proceeds to block 814.

At block 814, in some examples, the example recovery analyzer 708 controls the tension device 110 and/or the actuator 112 to adjust the tension to the range.

At block 816, the UAV 120 is brought into contact with the tether line 108.

At block 818, the UAV 120 is drawn and/or reeled toward the base 133 with the tether line 108. In some examples, the UAV 120 is brought toward the guide 602 by the tether line 108 as the UAV 120 is brought closer to the mast 102.

At block 820, in some examples, the UAV 120 is held and/or aligned by the mast 102. For example, the UAV 120 is reeled in toward the mast 102 via the tether line 108 until the UAV 120 is aligned with a portion of the mast 102 (e.g., the guide 602).

At block 822, the kite 116 is drawn and/or reeled toward the mast 102 via the tether line 108.

At block 824, the mast 102 is folded and/or rotated toward the base 133. In some examples, the mast analyzer 706 directs the actuator 112 to rotate the mast 102.

At block 826, the kite 116 is recovered. In particular, the kite 116 is removed from the tether line 108. Subsequently, the kite 116 is stowed.

At block 830, it is determined whether to repeat the process. If the process is to be repeated (block 830), control of the process returns to block 802. Otherwise, the process ends.

FIG. 9 is a block diagram of an example processor platform 900 structured to execute the instructions of FIG. 9 to implement the recovery analysis system 700 of FIG.7. The processor platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a headset or other wearable device, or any other type of computing device.

The processor platform 900 of the illustrated example includes a processor 912. The processor 912 of the illustrated example is hardware. For example, the processor 912 can be implemented by one or more integrated circuits, logic circuits, microprocessors, GPUs, DSPs, or controllers from any desired family or manufacturer. The hardware processor may be a semiconductor based (e.g., silicon based) device. In this and other examples, the processor implements the example mast analyzer 706, the example recovery analyzer 708 and the example kite analyzer 710.

The processor 912 of the illustrated example includes a local memory 913 (e.g., a cache). The processor 912 of the illustrated example is in communication with a main memory including a volatile memory 914 and a non-volatile memory 916 via a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 916 may be implemented by flash memory and/or any other desired type of memory device. Access to the main memory 914, 916 is controlled by a memory controller.

The processor platform 900 of this and other examples may also include an interface circuit 920. The interface circuit 920 may be implemented by any type of interface standard, such as an Ethernet interface, a universal serial bus (USB), a Bluetooth^{®} interface, a near field communication (NFC) interface, and/or a PCI express interface.

In this and other examples, one or more input devices 922 may be connected to the interface circuit 920. The input device(s) 922 permit(s) a user to enter data and/or commands into the processor 912. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 924 are also connected to the interface circuit 920 of this and other examples. The output devices 924 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 920 of this and other examples, thus, typically includes a graphics driver card, a graphics driver chip and/or a graphics driver processor.

The interface circuit 920 of this and other examples may also include a communication device such as a transmitter, a receiver, a transceiver, a modem, a residential gateway, a wireless access point, and/or a network interface to facilitate exchange of data with external machines (e.g., computing devices of any kind) via a network 926. The communication can be via, for example, an Ethernet connection, a digital subscriber line (DSL) connection, a telephone line connection, a coaxial cable system, a satellite system, a line-of-site wireless system, a cellular telephone system, etc.

The processor platform 900 of the this and other examples may also include one or more mass storage devices 928 for storing software and/or data. Examples of such mass storage devices 928 include floppy disk drives, hard drive disks, compact disk drives, Blu-ray disk drives, redundant array of independent disks (RAID) systems, and digital versatile disk (DVD) drives.

The machine executable instructions 932 of FIG.8 may be stored in the mass storage device 928, in the volatile memory 914, in the non-volatile memory 916, and/or on a removable non-transitory computer readable storage medium such as a CD or DVD.

From the foregoing, it will be appreciated that example methods, apparatus and articles of manufacture have been disclosed that enable compact, space-saving and lightweight recovery of aircraft. Examples disclosed herein also enable aircraft recovery systems that are easy and quick to operate. Examples disclosed herein also can necessitate fewer operators and equipment than known recovery systems.

Although certain example methods, apparatus and articles of manufacture have been disclosed herein, the scope of coverage of this patent is not limited thereto. On the contrary, this patent covers all methods, apparatus and articles of manufacture falling within the scope of the claims of this patent.

## Claims

1. A mast (102) for recovery of an aircraft (120), the mast (102) comprising:
a base (113);
a pivot (104) fixed to the base (133);
a first spine (106) rotatable about the pivot (104);
a kite (116);
a tether line (108);
first and second opposing arms (202) extending from the first spine (106), the first and second opposing arms (202) supporting at least a portion of the kite (116), the kite (116) carrying the tether line (108) for recovery of the aircraft (120); and
a second spine (210) extending from the first spine (106), the second spine (210) including third and fourth opposing arms (212) extending therefrom, wherein the third and fourth opposing arms (212) guide movement and positioning of the tether line (108).

2. The mast (102) as in claim 1, wherein the third and fourth opposing arms (212) extend in an approximately V-shaped arrangement.

3. The mast (102) as in claim 1 or claim 2, wherein the first and second opposing arms (202) extend in an approximately V-shaped arrangement.

4. The mast (102) as in any of claims 1 to 3, wherein the first spine (106) is telescoping.

5. The mast (102) as in any of claims 1 to 4, further including an actuator (112) to move the mast (102).

6. The mast (102) as defined in claim 5, further comprising a sensor (115) and a controller (114), and wherein:
the actuator (112) is operatively coupled to the sensor (115); and
the controller (114) is communicatively coupled to the actuator (112) and the sensor (115), and the controller (114) is configured to direct the actuator (112) to rotate the mast (102) based on sensor data from the sensor (115).

7. The mast (102) as defined in claim 6, wherein the data pertain to a position of the kite (116), an alignment of the kite (116) relative to a center line of the mast (102) and/or flight information of the aircraft (120).

8. The mast (102) as in any of claims 1 to 7, wherein the first and second opposing arms (202) exhibit curvature (206) complementary to a shape of the kite (116).

9. The mast (102) of any of claims 1 to 8, wherein the aircraft (120) is an unmanned aerial vehicle.

10. The mast (102) of any of claims 1 to 9, wherein the first and second opposing arms (202) and/or the third and fourth opposing arms (212) are foldable and/or move apart and closer to one another.

11. A ship (101) comprising the mast (102) of any of claims 1 to 10.

12. A method comprising:
placing a kite (116) onto a mast (102), the mast (102) having a first spine (106) with first and second opposing arms (202) extending therefrom to hold the kite (116), the mast further comprising a second spine (210) extending from the first spine (106), the second spine (210) including third and fourth opposing arms (212) extending therefrom, wherein the kite (116) is operatively coupled to a tether line (108);
rotating the mast (102) about a pivot (104) to launch the kite (116) from a base (133); and
recovering an aircraft (120) via the tether line (108) supported by the kite (116).

13. The method as defined in claim 12, further including:
drawing, by a tension device (110), the kite (116) onto the mast (102) subsequent to recovering the aircraft (120); and
rotating the mast (102) toward the base (133) to recover the kite (116).

14. The method as defined in claim 12 or 13, further including:
determining, via instructions executed by at least one processor, a degree to which the mast (102) is to be rotated; and
directing an actuator (112) to rotate the mast (102) based on the degree.

15. The method as defined in claim 14, wherein the determining the degree to which the mast (102) is to be rotated is based on sensor data from a sensor (115), the sensor data pertaining to whether the kite (116) is centered relative to the mast (102).

## Patentansprüche

1. Mast (102) zum Bergen eines Luftfahrzeugs (120), wobei der Mast (102) umfasst:
eine Basis (113);
einen an der Basis (133) befestigten Angelpunkt (104);
eine um den Angelpunkt (104) drehbare erste Stange (106);
einen Drachen (116);
eine Fangleine (108);
erste und zweite gegenüberliegende Arme (202), die von der ersten Stange (106) abstehen, wobei die ersten und zweiten gegenüberliegenden Arme (202) zumindest einen Teil des Drachens (116) tragen, wobei der Drachen (116) die Fangleine (108) zum Bergen des Luftfahrzeugs (120) trägt; und
eine von der ersten Stange (106) abstehende zweite Stange (210), wobei die zweite Stange (210) einen dritten und einen vierten gegenüberliegenden Arm (212) aufweist, die von ihr abstehen, wobei der dritte und der vierte gegenüberliegende Arm (212) die Bewegung und Positionierung der Fangleine (108) führen.

2. Mast (102) nach Anspruch 1, bei dem sich der dritte und der vierte gegenüberliegende Arm (212) in einer ungefähr V-förmigen Anordnung erstrecken.

3. Mast (102) nach Anspruch 1 oder 2, bei dem sich der erste und der zweite gegenüberliegende Arm (202) in einer ungefähr V-förmigen Anordnung erstrecken.

4. Mast (102) nach einem der Ansprüche 1 bis 3, bei dem die erste Stange (106) teleskopierbar ist.

5. Mast (102) nach einem der Ansprüche 1 bis 4, der ferner einen Aktuator (112) zum Bewegen des Mastes (102) aufweist.

6. Mast (102) nach Anspruch 5, ferner mit einem Sensor (115) und einem Steuergerät (114), und wobei:
der Aktuator (112) operativ mit dem Sensor (115) gekoppelt ist; und
die Steuerung (114) kommunikativ mit dem Aktuator (112) und dem Sensor (115) gekoppelt ist, und die Steuerung (114) konfiguriert ist, um basierend auf Sensordaten von dem Sensor (115) den Aktuator (112) anzuweisen, den Mast (102) zu drehen.

7. Mast (102) nach Anspruch 6, bei dem die Daten eine Position des Drachens (116), eine Ausrichtung des Drachens (116) relativ zu einer Mittellinie des Mastes (102) und/oder Fluginformation des Luftfahrzeugs (120) betreffen.

8. Mast (102) nach einem der Ansprüche 1 bis 7, bei dem der erste und zweite gegenüberliegende Arm (202) eine Krümmung (206) aufweisen, die komplementär zu einer Form des Drachens (116) ist.

9. Mast (102) nach einem der Ansprüche 1 bis 8, wobei das Luftfahrzeug (120) ein unbemanntes Luftfahrzeug ist.

10. Mast (102) nach einem der Ansprüche 1 bis 9, bei dem der erste und der zweite gegenüberliegende Arm (202) und/oder der dritte und der vierte gegenüberliegende Arm (212) faltbar sind und/oder sich voneinander weg und aufeinander zu bewegen.

11. Schiff (101) mit dem Mast (102) nach einem der Ansprüche 1 bis 10.

12. Verfahren mit den Schritten:
Anbringen eines Drachens (116) an einem Mast (102), wobei der Mast (102) eine erste Stange (106) mit davon abstehenden ersten und zweiten gegenüberliegenden Armen (202) zum Halten des Drachens (116) aufweist, wobei der Mast ferner eine zweite Stange (210) aufweist, die von der ersten Stange (106) absteht, wobei die zweite Stange (210) von ihr abstehende dritte und vierte gegenüberliegende Arme (212) aufweist, wobei der Drachen (116) operativ mit einer Fangleine (108) verbunden ist;
Drehen des Mastes (102) um einen Angelpunkt (104), um den Drachen (116) von einer Basis (133) zu starten; und
Bergen eines Luftfahrzeugs (120) über die von dem Drachen (116) getragene Leine (108).

13. Verfahren nach Anspruch 12, ferner mit den Schritten:
Heranziehen des Drachens (116) an den Mast (102) durch eine Spannvorrichtung (110) im Anschluss an das Bergen des Luftfahrzeugs (120); und
Drehen des Mastes (102) in Richtung der Basis (133), um den Drachen (116) zu bergen.

14. Verfahren nach Anspruch 12 oder 13, ferner mit den Schritten:
Bestimmen eines Grades, bis zu dem der Mast (102) gedreht werden soll, über von mindestens einem Prozessor ausgeführte Anweisungen; und
basierend auf dem Grad, Anweisen eines Aktuators (112), den Mast (102) zu drehen.

15. Verfahren nach Anspruch 14, wobei das Bestimmen des Grades, bis zu dem der Mast (102) gedreht werden soll, auf Sensordaten von einem Sensor (115) basiert, wobei die Sensordaten sich darauf beziehen, ob der Drachen (116) relativ zu dem Mast (102) zentriert ist.

## Revendications

1. Mât (102) pour la récupération d'un aéronef (120), le mât (102) comprenant :
une base (113) ;
un pivot (104) fixé à la base (133) ;
une première colonne vertébrale (106) pouvant tourner autour du pivot (104) ;
un cerf-volant (116) ;
une ligne d'attache (108) ;
des premier et deuxième bras opposés (202) s'étendant à partir de la première colonne vertébrale (106), les premier et deuxième bras opposés (202) supportant au moins une partie du cerf-volant (116), le cerf-volant (116) portant la ligne d'attache (108) pour une récupération de l'aéronef (120) ; et
une seconde colonne vertébrale (210) s'étendant à partir de la première colonne vertébrale (106), la seconde colonne vertébrale (210) incluant des troisième et quatrième bras opposés (212) s'étendant à partir de celle-ci, dans lequel les troisième et quatrième bras opposés (212) guident le déplacement et le positionnement de la ligne d'attache (108).

2. Mât (102) selon la revendication 1, dans lequel les troisième et quatrième bras opposés (212) s'étendent selon un agencement approximativement en forme de V.

3. Mât (102) selon la revendication 1 ou la revendication 2, dans lequel les premier et deuxième bras opposés (202) s'étendent selon un agencement approximativement en forme de V.

4. Mât (102) selon l'une quelconque des revendications 1 à 3, dans lequel la première colonne vertébrale (106) est télescopique.

5. Mât (102) selon l'une quelconque des revendications 1 à 4, comprenant en outre un actionneur (112) pour déplacer le mât (102).

6. Mât (102) selon la revendication 5, comprenant en outre un capteur (115) et un dispositif de commande (114), et dans lequel :
l'actionneur (112) est couplé de manière opérationnelle au capteur (115) ; et
le dispositif de commande (114) est couplé en communication avec l'actionneur (112) et le capteur (115), et le dispositif de commande (114) est configuré pour diriger l'actionneur (112) afin de faire tourner le mât (102) sur la base des données de capteur provenant du capteur (115).

7. Mât (102) selon la revendication 6, dans lequel les données concernent une position du cerf-volant (116), un alignement du cerf-volant (116) par rapport à une ligne centrale du mât (102) et/ou des informations de vol de l'aéronef (120).

8. Mât (102) selon l'une quelconque des revendications 1 à 7, dans lequel les premier et deuxième bras opposés (202) présentent une courbure (206) complémentaire à une forme du cerf-volant (116).

9. Mât (102) selon l'une quelconque des revendications 1 à 8, dans lequel l'aéronef (120) est un véhicule aérien sans pilote.

10. Mât (102) selon l'une quelconque des revendications 1 à 9, dans lequel les premier et deuxième bras opposés (202) et/ou les troisième et quatrième bras opposés (212) sont pliables et/ou s'écartent et se rapprochent l'un de l'autre.

11. Navire (101) comprenant le mât (102) selon l'une quelconque des revendications 1 à 10.

12. Procédé, comprenant les étapes consistant à :
placer un cerf-volant (116) sur un mât (102), le mât (102) présentant une première colonne vertébrale (106) avec des premier et deuxième bras opposés (202) s'étendant depuis celle-ci pour maintenir le cerf-volant (116), le mât comprenant en outre une seconde colonne vertébrale (210) s'étendant depuis la première colonne vertébrale (106), la seconde colonne vertébrale (210) incluant des troisième et quatrième bras opposés (212) s'étendant depuis celle-ci, dans lequel le cerf-volant (116) est couplé de manière opérationnelle à une ligne d'attache (108) ;
faire tourner le mât (102) autour d'un pivot (104) pour lancer le cerf-volant (116) à partir d'une base (133) ; et
récupérer un aéronef (120) via la ligne d'attache (108) supportée par le cerf-volant (116).

13. Procédé selon la revendication 12, comprenant en outre les étapes consistant à :
attirer, par un dispositif de tension (110), le cerf-volant (116) sur le mât (102) après la récupération de l'aéronef (120) ; et
faire tourner le mât (102) vers la base (133) pour récupérer le cerf-volant (116).

14. Procédé selon la revendication 12 ou 13, incluant en outre les étapes consistant à :
déterminer, via des instructions exécutées par au moins un processeur, un degré selon lequel le mât (102) doit être tourné ; et
diriger un actionneur (112) pour faire tourner le mât (102) sur la base du degré.

15. Procédé selon la revendication 14, dans lequel la détermination du degré selon lequel le mât (102) doit être tourné est basée sur des données de capteur provenant d'un capteur (115), les données de capteur concernant le cerf-volant (116) centré ou non par rapport au mât (102).
